# EUROPÄISCHE PATENTSCHRIFT

(11) **EP 2 635 164 B1**
(45) Veröffentlichungstag und Bekanntmachung des Hinweises auf die Patenterteilung: **10.12.2014**
(21) Anmeldenummer: 11771162.2
(22) Anmeldetag: 20.10.2011
(51) Int. Cl.: A47J 31/54, H01H 47/32

(54) **SCHALTUNGSVORRICHTUNG FÜR EIN HAUSHALTSGERÄT**
CIRCUIT APPARATUS FOR A DOMESTIC APPLIANCE
DISPOSITIF À CIRCUIT POUR APPAREIL MÉNAGER

(30) Priorität: 02.11.2010 DE 102010043219
(43) Veröffentlichungstag der Anmeldung: 11.09.2013
(73) Patentinhaber: BSH Bosch und Siemens Hausgeräte GmbH, 81739 München (DE)
(72) Erfinder: BRUNNER, Andreas, 83278 Traunstein (DE); STIEF, Peter, 83329 Waging am See (DE)
(86) Internationale Anmeldenummer: PCT/EP2011/068326
(87) Internationale Veröffentlichungsnummer: WO 2012/059331

(56) Entgegenhaltungen:
- EP-B1- 1 854 386
- DE-U1-202008 013 555

## Beschreibung

Die Erfindung betrifft eine Stromschaltungsvorrichtung für ein Haushaltsgerät, insbesondere für eine Getränkezubereitungseinrichtung, mit einem Stromkreis zur Versorgung der Stromschaltungsvorrichtung mit elektrischem Strom, mit einer elektrisch betriebenen Steuereinheit im Stromkreis, die zur Abgabe von Steuersignalen ausgebildet ist, mit einem Taster im Stromkreis, der so geschaltet ist, dass er die Steuereinheit mit Strom versorgen kann und der einen ersten Schaltkontakt und ein Bedienelement umfasst, mit einem zweiten Schaltkontakt im Stromkreis, der so geschaltet ist, dass er die Steuereinheit unabhängig vom Taster mit Strom versorgen kann und der eine Signalverbindung zur Steuereinheit aufweist und der gemäß den Signalen der Steuereinheit öffnet oder schließt.

Vor allem Heißgetränkezubereitungseinrichtungen sind in der Regel ständig über einen Netzstecker mit einem Stromnetz verbunden, selbst wenn zeitweilig kein Bedarf an der Bereitung eines Getränks vorhanden ist. Dieser sogenannte "stand-by"-Zustand für Betriebspausen der Zubereitungseinrichtung verbraucht regelmäßig dennoch einen gewissen Strom, der eingespart werden kann. Die EP 1 854 386 B1 zeigt eine Getränkezubereitungsmaschine mit einer Steuereinheit, mit mindestes einer Funktionseinheit, mit einem Stromkreis zur Versorgung der Funktionseinheit und der Steuereinheit mit Strom. Der Stromkreis umfasst einen ersten Schaltkontakt, einen zweiten Schaltkontakt und ein Betätigungselement. Dabei sind der erste Schaltkontakt und der zweite Schaltkontakt im Stromkreis parallel geschaltet. Das Betätigungselement und der erste Schaltkontakt wirken derart zusammen, dass der erste Schaltkontakt durch die erste Betätigung des Betätigungselements in den geschlossenen Zustand bringbar ist und der erste Schaltkontakt nach der zweiten Betätigung des Betätigungselements den offenen Zustand einnimmt. Der zweite Schaltkontakt ist mit einem Steuersignal der Steuereinheit steuerbar, so dass der zweite Schaltkontakt in Abhängigkeit von dem jeweiligen Steuersignal entweder den geschlossenen oder den offenen Zustand einnimmt. Es sind Erfassungsmittel zum Erfassen einer Betätigung des Betätigungselements vorhanden, die mit der Steuereinheit derart zusammenwirken, dass die jeweilige Betätigung von der Steuereinheit registriert wird. Die Erfassungsmittel sind in Form eines dritten Schaltkontakts realisiert, der bei einer Betätigung des Betätigungselements vom offenen in den geschlossenen Zustand übergeht oder umgekehrt. Die Erfassungsmittel, insbesondere der dritte Schaltkontakt sind als mechanische Komponenten dem Verschleiß unterworfen. DE202008013555U1 offenbart eine Stromschaltungsvorrichtung einer Getränkebereitungsmachine gemäß dem Oberbegriff des Anspruchs 1. Aufgabe der vorliegenden Erfindung ist es, eine zuverlässige, sichere und vom Anwender leicht zu bedienende Vorrichtung zum An- und insbesondere selbstständigen Abschalten eines Haushaltsgeräts anzugeben.

Diese Aufgabe wird bei einer Stromschaltungsvorrichtung der eingangs genannten Art erfindungsgemäß durch eine Erfassungsvorrichtung gelöst, die sich im Stromkreis befindet, und dadurch, dass das Bedienelement des Tasters mit dem ersten Schaltkontakt derart zusammenwirkt, dass der erste Schaltkontakt durch eine Betätigung des Bedienelements schließt und nach einer kurzen definierten Zeitdauer wieder öffnet. Dabei ist die Zeitdauer so bemessen, dass die Stromversorgung für die Steuereinheit ausreicht, um den zweiten Schaltkontakt über ein entsprechendes Signal zu schließen, zum Beispiel durch einen Stromstoß an eine Relaisspule. Dabei kann der Taster so ausgebildet sein, dass der erste Schaltkontakt nur so lange geschlossen bleibt, solange das Bedienelement betätigt wird. Hierbei obliegt es dem Anwender das Bedienelement so lange zu betätigen, bis der zweite Schaltkontakt geschlossen ist. Der Anwender kann dabei zum Beispiel durch eine zusätzliche Signalvorrichtung unterstützt werden, die ein akustisches und/oder optisches Signal aussendet, sobald der zweite Schaltkontakt geschlossen ist. Alternativ kann die Einhaltung der definierten Zeitdauer bereits durch eine geeignete Ausbildung des Tasters selbst zum Beispiel mit Hilfe entsprechender elektronischer Bauteile und/oder Software realisiert werden. Der erste Schaltkontakt und das Bedienelement können sowohl eine integrierte Einheit bilden als auch als separate Einheiten ausgeführt sein.

Die Erfassungsvorrichtung umfasst eine Messeinrichtung, die Messwerte aus den anliegenden elektrischen Spannungen ermittelt und Änderungen im Verlauf der Messwerte erkennt. Dabei kann der Messwert die Spannung selbst oder eine daraus abgeleitete physikalische Größe sein. Die Messeinrichtung weist außerdem eine Signalverbindung zur Steuereinheit auf und ist dazu ausgebildet, ein den jeweiligen Messwerten entsprechendes Signal an die Steuereinheit abzugeben. Die Steuereinheit gibt basierend auf dem Signal der Messeinrichtung ein Signal zum Öffnen oder Schließen an den zweiten Schaltkontakt ab, woraufhin jener in den geöffneten bzw. geschlossenen Zustand übergeht.

Die Erfassungsvorrichtung umfasst ferner zwei als Strommodifikatoren bezeichnete elektrische Bauelemente oder Gruppen von miteinander verschalteten Bauelementen, die im Stromkreis so angeordnet sind, dass die Messeinrichtung vom ersten Schaltkontakt über den ersten Strommodifikator sowie vom zweiten Schaltkontakt über den zweiten Strommodifikator mit Strom versorgt werden kann. Sie sind außerdem so angeordnet, dass die Steuereinheit vom ersten Schaltkontakt über den ersten und den zweiten Strommodifikator mit Strom versorgt werden kann. Die Strommodifikatoren wirken derart auf den sie durchfließenden elektrischen Strom ein, dass je nachdem, ob einer oder beide Schaltkontakte geschlossen sind, jeweils unterschiedliche, ggf. vordefinierte elektrische Spannungen an der Messeinrichtung anliegen.

Die Messeinrichtung kann durch Messung der unterschiedlichen elektrischen Spannungen die Zustände der beiden Schaltkontakte erfassen. Dazu sind die beiden Strommodifikatoren jeweils so ausgebildet und aufeinander abgestimmt, dass die an der Messeinrichtung abfallende elektrische Spannung sich signifikant für die einzelnen Schalterstellungen unterscheidet. Ist nach erstmaligem Betätigen des Tasters der erste Schaltkontakt geschlossen und der zweit Schaltkontakt noch offen, wird die Messeinrichtung ausschließlich über den ersten Strommodifikator mit elektrischer Spannung versorgt. Die Messeinrichtung ermittelt aus dieser elektrischen Spannung einen ersten Messwert. Hat die Steuereinrichtung zusätzlich den zweiten Schaltkontakt geschlossen, wird die Messeinrichtung diesmal über beide Strommodifikatoren mit elektrischer Spannung versorgt. Der von der Messeinrichtungen ermittelte zweite Messwert unterscheidet sich deshalb deutlich vom ersten Messwert. Öffnet der Taster den zweiten Schaltkontakt wieder, so wird die Messeinrichtung ausschließlich über den zweiten Strommodifikator mit elektrischer Spannung versorgt. Der zweite Strommodifikator ist so ausgelegt, dass die Messeinrichtung dabei einen dritten Messwert ermittelt, der sich signifikant vom ersten und zweiten Messwert unterscheidet.

Die Messeinrichtung verfügt über eine Flankenerkennung, dass heißt eine Einrichtung zur Erkennung der Übergänge der aktuellen und jeweils vorangegangenen Messwerte. Dazu wird der jeweils vorangegangene Messwert zwischengespeichert. Damit kann die Messeinrichtung erkennen, ob der Taster ein zweites Mal und somit zum Ausschalten der Getränkezubereitungseinrichtung betätigt wurde. Während des Betriebs der Getränkezubereitungseinrichtung ist der zweite Schaltkontakt geschlossen und der erste Schaltkontakt offen. Die Messeinrichtung misst die entsprechende elektrische Spannung und ermittelt den dritten Messwert. Wird zum Ausschalten der Taster betätigt, schließt der erste Schaltkontakt und somit sind beide Schaltkontakte geschlossen. Die Messeinrichtung ermittelt entsprechend den zweiten Messwert. Aus der Flanke, dass heißt der Reihenfolge und der Art des zwischengespeicherten und des aktuell ermittelten Messwertes - die Messeinrichtung ermittelt zunächst den dritten und anschließend den zweiten Messwert - kann die Messeinrichtung eindeutig folgern, dass die Getränkezubereitungseinrichtung abgeschaltet werden soll. Sie sendet ein entsprechendes Signal an die Steuereinheit, die dann auf die oben beschriebene Weise den zweiten Schaltkontakt öffnet und damit die Getränkezubereitungseinrichtung abgeschaltet. Für die Flankenerkennung können Standardlösungen, wie zum Beispiel geeignete programmierbare Logik-Bausteine oder softwarebasierte Mikrocontroller eingesetzt werden.

In einer alternativen Ausprägung der Stromschaltungsvorrichtung kann die Flankenerkennung oder Teile der Flankenerkennung, dass heißt die Zwischenspeicherung und/oder die Auswertung zweier aufeinanderfolgender Messwerte auch von der Steuereinheit übernommen werden. Die Messeinrichtung übermittelt dann lediglich Messwerte über die Signalverbindung an die Steuereinheit.

Als elektrische Strommodifikatoren können zum Beispiel Dioden oder geeignete elektrische Widerstände zum Einsatz kommen. Für die Messeinrichtung genügt eine einfache Anordnung, da auf die Messgenauigkeit kein besonderer Wert gelegt werden muss. Lediglich wenige dezidierte Spannungswerte, welche die verschiedenen Zustände der Schaltkontakte repräsentieren, müssen voneinander unterschieden werden. Zum Beispiel kann eine einfache Spannungsteilerschaltung vorgesehen sein, um die elektrische Spannung in einen geeigneten Messbereich zu transformieren und ein in Serie geschalteter Mikrocontroller für die Erfassung und Auswertung der Spannungswerte, sowie die Übermittlung eines geeigneten Signals. Entsprechend den ermittelten Messwerten gibt die Messeinrichtung über die Signalverbindung ein Signal in analoger oder digitaler Form an die Steuereinheit ab. Das kann der Spannungswert selbst oder eine daraus abgeleitete Information sein. Vorteilhafterweise wird hierfür eine elektrische Signalverbindung eingesetzt, da diese einfach und kostengünstig implementiert werden kann. Für das Prinzip der Stromschaltungsvorrichtung ist aber auch jede andere, zum Beispiel optische Signalverbindung denkbar. Die Steuereinheit kann kostengünstig als verbindungsprogrammierten Steuerung (VPS) ausgebildet sein, d.h. als Schaltungsanordnung mit einfachen elektronischen Bauteilen. Alternativ kann eine speicherprogrammierte Steuerung (SPS) basierend auf einem Mikrocontroller mit integriertem Arbeits- und Programmspeicher zum Einsatz kommen.

Dadurch, dass der erste Schaltkontakt nach Betätigen des Tasters selbstständig wieder öffnet, wird die Stromversorgung während des Betriebs der Getränkezubereitungseinrichtung im Wesentlichen über den zweiten Schaltkontakt gesteuert, der ohne Zutun des Anwenders über die Steuereinheit geöffnet oder geschlossen wird. Dadurch sind die Voraussetzungen geschaffen, dass sich die Getränkezubereitungseinrichtung selbständig abschalten d.h. vom Stromnetz trennen kann. Das kann insbesondere im Sicherheitsoder Fehlerfall einzelner Funktionseinheiten der Getränkezubereitungseinrichtung, zum Beispiel bei Überhitzung von Motoren oder Fehlern bei der Ansteuerung der Heizelemente, vorteilhaft genutzt werden. Ein weiterer wesentlicher Vorteil der Stromschaltungsvorrichtung besteht darin, dass die Erfassung der Tasterbetätigung ohne zusätzliche mechanische Komponenten, wie zum Beispiel einem zusätzlichen Schalter, auskommt. Die Betätigung des Tasters wird vielmehr im Kontext der aktuellen Zustände der Schaltkontakte und damit im Kontext des Betriebszustandes der Getränkezubereitungseinrichtung über nicht-mechanische elektrische Bauelemente, wie z.B. Dioden, Widerstände und Mikrocontroller erfasst. Mechanische Komponenten verbrauchen in der Regel mehr Strom und sind dem Verschleiß stärker unterworfen als nicht-mechanische. Sie können deshalb leichter ausfallen, was zur Konsequenz hätte, dass die Getränkezubereitungseinrichtung von einem Anwender nicht mehr abzuschalten wäre. Das wiederum könnte zu einem Sicherheitsrisiko werden. Außerdem kann ein sehr einfach aufgebauter, kostengünstiger und robuster d.h. verschleißarmer Taster verwendet werden. Das erhöht die Zuverlässigkeit der Ein- und Ausschaltfunktion der Getränkezubereitungseinrichtung und damit deren Sicherheit.

Gemäß einer bevorzugten Ausführungsform der Stromschaltungsvorrichtung gibt die Steuereinheit, sobald sie durch erstmaliges Betätigen des Tasters mit Strom versorgt wird, an den zweiten Schaltkontakt ein Steuersignal zum Schließen ab. Der zweite Schaltkontakt schließt sich daraufhin. Von da an überbrückt der zweite Schaltkontakt den ersten Schaltkontakt, der sich - wie bereits beschrieben - selbstständig nachdem Schließen des zweiten Schaltkontakts wieder geöffnet hat, und versorgt seinerseits die Steuereinheit mit Strom. Der zweite Schaltkontakt bleibt geschlossen, dass heißt, er geht in Selbsthaltung. Die Selbsthaltung kann jedoch durch ein entsprechendes Signal der Steuereinheit, das den zweiten Schaltkontakt veranlasst, sich zu öffnen und die Stromversorgung der Steuereinheit zu unterbrechen, wieder aufgelöst werden.

In einer vorteilhaften Ausgestaltung umfasst die Stromschaltungsvorrichtung ein Relais, das so geschaltet ist, dass die Relaisspule bei geschlossenem zweiten Schaltkontakt mit elektrischem Strom versorgt wird. Der zweite Schaltkontakt ist dann als Schließkontakt des Relais ausgebildet. Die Steuereinheit weist außerdem ein elektrisches Betriebsmittel auf, zum Beispiel einen Transistor, um die Stromversorgung der Relaisspule bei Erhalt eines geeigneten Steuersignals zu unterbrechen und damit den zweiten Schaltkontakt zu öffnen.

Nach erstmaligem Betätigen des Tasters wird die Steuereinheit und insbesondere das Relais mit Strom versorgt und zieht daraufhin den Schließkontakt des Relais an. Der zweite Schaltkontakt ist damit geschlossen und geht in Selbsthaltung über, da die Relaisspule jetzt permanent mit Strom versorgt wird. Erst wenn die Steuereinheit ein entsprechendes Signal erhält, unterbricht sie die Stromversorgung der Relaisspule mit Hilfe des elektrischen Betriebsmittels. Dadurch öffnet der Schließkontakt des Relais, d.h. der zweite Schaltkontakt. Die Selbsthaltung des zweiten Schaltkontakts ist aufgehoben. Das entsprechende Signal kann zum Beispiel von der Messeinrichtung kommen, wenn sie eine Betätigung des Tasters zum Zweck der Geräteabschaltung erkannt hat. Die Steuereinheit und der zweiter Schaltkontakt können alternativ auch als Schaltungsanordnung mit einem Halbleiterschalter, zum Beispiel einem Transistor ausgebildet sein.

Die Selbsthaltung in Kombination mit dem Taster verleiht der Stromschaltungsvorrichtung eine hohe Betriebssicherheit. Denn bei einem Stromausfall löst sich die Selbsthaltung des zweiten Schaltkontakts selbsttätig, da die Steuereinheit nicht mehr mit Strom versorgt wird. Weil der zweite Schaltkontakt sich von selbst öffnet, aber nicht schließt, kann die Getränkezubereitungseinrichtung nicht wieder selbsttätig anlaufen, wenn die Netzspannung nach dem Stromausfall wieder anliegt.

Die Stromschaltungsvorrichtung kann prinzipiell sowohl für elektrische Wechselspannung als auch für Gleichspannung eingesetzt werden. Falls die Stromschaltungsvorrichtung für Wechselspannung eingesetzt wird, können die Strommodifikatoren jeweils als Dioden ausgebildet sein, von denen eine Diode die Messeinrichtung mit einer Halbwelle, z.B. der positiven Halbwelle, und die andere Diode die Messeinrichtung mit einer entgegengesetzt gerichteten Halbwellen, z.B. der negativen Halbwelle, der Netzspannung versorgt. Dadurch ergibt sich je nach Stellung der beiden Schaltkontakte an der Messeinrichtung ein anderer Spannungswert. Wenn nur der ersten Schaltkontakt geschlossen ist, wird die Messeinrichtung über die erste Diode ausschließlich mit einer ersten der beiden Halbwellen der Netzspannung versorgt. Sind beide Schaltkontakte geschlossen, liegt an der Messeinrichtung die vollständige Wechselspannung mit beiden Halbwellen an. Ist nur der zweite Schaltkontakt geschlossen, so wird die Messeinrichtung über die zweite Diode ausschließlich mit einer zweiten der beiden Halbwellen des Wechselstroms versorgt. Weil jedem dieser Schaltzustände ein individueller Messwert zugeordnet werden kann und dadurch, dass zwei aufeinanderfolgende Messwerte betrachtet werden, kann die Messeinrichtung ermitteln, ob der Taster zum Zweck der Geräteabschaltung betätigt wurde.

An die Dioden werden keine besonderen Anforderungen gestellt. Es können z.B. Standard-Dioden für die Gleichrichtung eingesetzt werden, die den Strom nur in einer Richtung passieren lassen und in der anderen Richtung wie ein Isolator wirken. Für die Bestimmung eines Messwertes für jede Schalterstellung der Schaltkontakte kann die Messeinrichtung aus der Spannungsmessung jeweils einen repräsentativen Wert ermitteln, zum Beispiel einen Mittelwert.

Prinzipiell können die Strommodifikatoren in einer einfachen Ausführungsform auch als elektrische Widerstände ausgebildet sein, insbesondere wenn die Stromschaltungsvorrichtung für Gleichspannung eingesetzt wird. Die Bemessung der Widerstände ist dabei so gewählt, dass für jede der Schalterstellungen der Schaltkontakte eine andere Spannung an der Messeinrichtung abfällt. In einer weiteren Ausgestaltungsform können die Strommodifikatoren auch als Kombination geeigneter Widerstände und Dioden ausgebildet sein.

Die Stromschaltungsvorrichtung kann nach einer weiteren vorteilhaften Ausgestaltung dahingehend erweitert werden, dass die Steuereinheit zusätzlich eine Signalverbindung zu einer Funktionseinheit der Getränkezubereitungseinrichtung aufweist, die für die Durchführung mindestens eines der zum Bereiten des Getränks beteiligten Prozesses zuständig ist. Die Steuereinheit kann bei Erhalt eines entsprechenden Steuersignals der Funktionseinheit, zum Beispiel bei Signalisierung einer sicherheitsrelevanten Fehlfunktion, ein Signal an den zweiten Schaltkontakt zum Öffnen übermitteln. Daraus ergibt sich ein Sicherheitsvorteil, denn der zweite Schaltkontakt kann zusätzlich als Element einer sicherheitsrelevanten Abschaltung eingesetzt werden. Dazu können in der Getränkezubereitungseinrichtung alle sicherheitsrelevanten Funktionseinheiten wie zum Beispiel die Heizung oder die Motoren mit einem Schaltkontakt ausgestattet sein, der im Sicherheitsfall die jeweilige Funktionseinheit automatisch abschaltet. Für eine sicherheitsrelevante Abschaltung werden zwei unabhängig voneinander agierende Abschaltelemente benötigt. Das bedeutet, dass jeweils zum Abschaltelement einer einzelnen Funktionseinheit der Getränkezubereitungseinrichtung ein zweites Abschaltelement in Reihe geschaltet sein muss, das im Versagensfall des ersten Abschaltelements die Abschaltung gewährleistet. Das kann in der Stromschaltungsvorrichtung der über die Steuereinheit gesteuerte zweite Schaltkontakt zentral für alle einzelnen Abschaltelemente der Funktionseinheiten übernehmen. Das wiederum trägt entscheidend zur Sicherheit und Zuverlässigkeit der Getränkezubereitungseinrichtung bei.

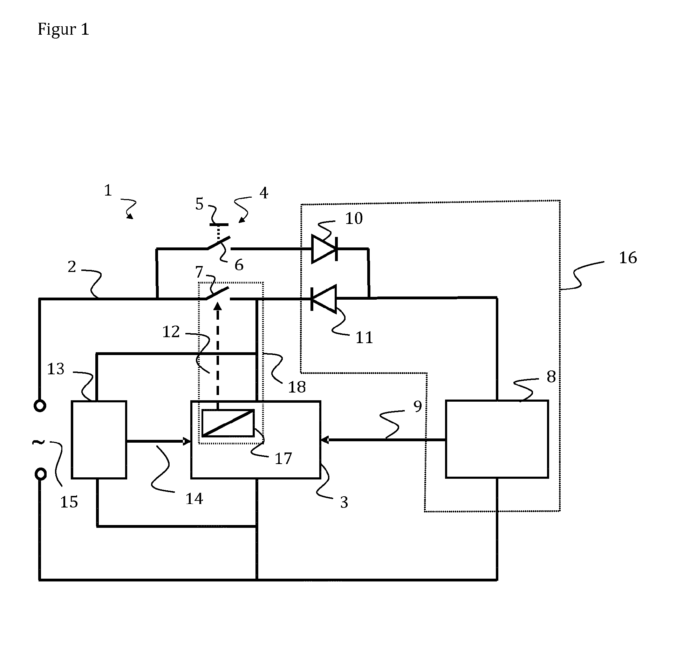

Das Prinzip der Erfindung wird im Folgenden anhand einer Zeichnung beispielshalber noch näher erläutert. Die einzige Figur zeigt das Schaltbild einer erfindungsgemäßen Stromschaltungsvorrichtung 1 einer Getränkezubereitungseinrichtung mit einem Stromkreis 2, der mit Wechselstrom aus einer Wechselstromquelle 15 versorgt wird. Der Stromkreis 2 umfasst einen Taster 4, der aus einem ersten Schaltkontakt 6 und einem Bedienelement 5 besteht. Über den Taster 4 schaltet der Anwender die Stromzufuhr für die Stromschaltungsvorrichtung 1 an oder ab und damit die Getränkezubereitungseinrichtung ein beziehungsweise aus. Das Bedienelement 5 wirkt mit dem ersten Schaltkontakt 6 derart zusammen, dass der erste Schaltkontakt 6 durch die Betätigung des Bedienelements 5 zunächst in den geschlossen Zustand übergeht und sich dann nach einer vorbestimmten kurzen Zeitdauer wieder öffnet. Das Bedienelement 5 ist als mechanisch durch Druck betätigbare Taste realisiert. Es kann aber auch in Form einer anderen Anwenderschnittstelle realisiert sein, zum Beispiel einem Berührungssensor.

Im Stromkreis 2 befindet sich außerdem ein zweiter Schaltkontakt 7, der so geschaltet ist, dass er den Stromkreis 2 alternativ zum ersten Schaltkontakt 6 mit Strom versorgen kann. Daher fließt im Stromkreis 2 nur dann Strom, wenn mindestens einer der beiden Schaltkontakte 6, 7 geschlossen ist. Der zweite Schaltkontakt 7 wird während des Betriebs von einer elektrisch betriebenen Steuereinheit 3 kontrolliert, die so angeordnet ist, dass sie von beiden Schaltkontakten 6, 7 mit Strom versorgt werden kann. Dabei wirkt die Steuereinheit 3 mit einem Steuersignal über eine Steuersignalleitung 12 derart auf den zweiten Schaltkontakt 7 ein, dass er sich öffnet oder schließt.

Dazu enthält die Stromschaltungsvorrichtung 1 ein Relais 18 mit einer Relaisspule 17, die so geschaltet ist, dass sie bei geschlossenem zweiten Schaltkontakt 7 mit elektrischem Strom versorgt wird und von der Steuereinrichtung 3 über ein geeignetes Betriebsmittel vom Strom getrennt werden kann. Der zweite Schaltkontakt 7 ist als Schließkontakt des Relais 18 ausgebildet. Er öffnet sich, wenn die Relaisspule 17 stromlos ist, und schließt, wenn die Relaisspule 17 mit Strom versorgt wird.

Des Weiteren enthält der Stromkreis 2 eine Erfassungsvorrichtung 16, die sich aus einer Messeinrichtung 8, einer ersten Diode 10 und einer zweiten Diode 11 zusammensetzt. Die Messeinrichtung 8 und die beiden Dioden 10, 11 sind dabei so angeordnet, dass die Messeinrichtung 8 vom ersten Schaltkontakt 6 über die erste Diode 10 sowie vom zweiten Schaltkontakt 7 über die zweite Diode 1 mit Strom versorgt werden kann. Die Messeinrichtung 8 weist eine Signalverbindung 9 zur Steuereinheit 3 auf. Sie ist dazu ausgebildet, die elektrische Spannung zu messen und abhängig davon ein Signal über die Signalverbindung 9 an die Steuereinheit 3 abzugeben. Dazu weist die Messeinrichtung 8 eine einfache Schaltungsanordnung auf, bestehend aus einer Spannungsteilerschaltung und einem Mikrocontroller. Die Spannungsteilerschaltung transformiert die Spannung auf einen für den Mikrocontroller messbaren Wert. Der Mikrocontroller misst Spannungswerte, bestimmt daraus Mittelwerte und speichert sie zwischen, führt Vergleichsoperationen bzgl. drei vordefinierter Werte aus und kann über die Signalverbindung 9 ein digitales Signal an die Steuereinheit 3 abgeben. Die erste Diode 10 ist in Reihe zum ersten Schaltkontakt 6 mit Durchlassrichtung zur Steuereinheit 3 und zur Messeinrichtung 8 geschaltet. Die zweite Diode 11 ist mit Sperrrichtung zur Messeinrichtung 8 und mit Durchlassrichtung zur Steuereinheit 3 geschaltet. Parallel zur Steuereinheit 3 ist im Stromkreis 2 eine Funktionseinheit 13 der Getränkezubereitungseinrichtung geschaltet. Sie repräsentiert die Bestandteile der Getränkezubereitungseinrichtung, die zum Bereiten eines Getränks mit Strom versorgt werden müssen. Anstelle der einen Funktionseinheit 13 können auch mehrere verschiedene Funktionseinheiten, die jeweils nur einen Teil der Funktionen abdecken, separat an den Stromkreis 2 angeschlossen werden. Zwischen der Funktionseinheit 13 und der Steuereinheit 3 gibt es eine zweite Signalverbindung 14. Die Funktionseinheit 13 kann im Betrieb über die Signalverbindung 14 Signale an die Steuereinheit 3 übermitteln. So kann im Fall eines sicherheitsrelevanten Ereignisses, zum Beispiel bei Überhitzung, die Funktionseinheit 13 an die Steuereinheit 3 ein Signal zum Abschalten senden.

Wird die Stromschaltungsvorrichtung 1 an die Wechselstromquelle 15 angeschlossen und der Taster 4 nicht betätigt, so sind beide Schaltkontakte 6, 7 offen und es fließt kein Strom. Sobald der Taster 4 gedrückt wird, schließt sich der erste Schaltkontakt 6 und die Steuereinheit 3 wird mit Strom versorgt. Die Steuereinheit 3 ist so aufgebaut, dass sie ihren Versorgungsstrom unmittelbar an die Relaisspule 17 weiterleitet, so dass der zweite Schaltkontakt 7 schließt. Der zweite Schalkontakt 7 geht dadurch in Selbsthaltung, so dass die Steuereinheit 3 jetzt über den zweiten Schaltkontakt 7 mit Strom versorgt wird. Der erste Schaltkontakt 6 verbleibt dabei so lange geschlossen bis auch der zweite Schaltkontakt 7 geschlossen ist und öffnet sich erst dann selbstständig wieder. Der Taster 4 ist dazu entsprechend ausgebildet. Die Selbsthaltung des zweiten Schaltkontakts 7 kann durch ein entsprechendes Signal, das über eine der beiden Signalverbindungen 9, 14 an die Steuereinheit 3 übermittelt wird, unterbrochen werden. Die Steuereinheit 3 öffnet dann, wie oben beschrieben, über die Relaisspule 17 den zweiten Schaltkontakt 7, wodurch die Stromschaltungsvorrichtung 1 vom Netz getrennt wird. Die Getränkezubereitungseinrichtung ist somit abgeschaltet.

Die Messeinrichtung 8 wird unmittelbar nach dem ersten Betätigen des Tasters 4 über die erste Diode 10 ausschließlich mit der ersten der beiden Halbwellen der Wechselspannung versorgt. Die Messeinrichtung 8 ermittelt daraus einen ersten Messwert, nämlich den Mittelwert der gemessenen Spannung. Sobald die Steuereinrichtung 3 den zweiten Schaltkontakt 7 geschlossen hat, liegt wegen der beiden bezüglich ihrer Sperrrichtung gegensätzlich orientierten Dioden 10, 11 an der Messeinrichtung 8 die vollständige Wechselspannung mit beiden Halbwellen an. Der von der Messeinrichtung 8 ermittelte zweite Messwert unterscheidet sich deshalb dem Betrag nach deutlich vom ersten Messwert. Öffnet der zweite Schaltkontakt 7 wieder, so wird die Messeinrichtung 4 über die zweite Diode 11 ausschließlich mit der zweiten der beiden Halbwellen des Wechselstroms versorgt. Die Messeinrichtung 8 ermittelt dabei einen dritten Messwert, der sich vom ersten Messwert im Wesentlichen durch das Vorzeichen und vom zweiten durch den Betrag unterscheidet. Damit kann die Erfassungsvorrichtung 16 im Betrieb alle drei aktiven Schalterstellungen der beiden Schaltkontakte 6, 7 erfassen. Durch Zwischenspeichern zumindest der jeweils vorangegangenen Schalterstellung respektive des korrelierenden Messwertes erkennt die Messeinrichtung 8, ob der Taster 4 zum ersten oder zum zweiten Mal betätigt wurde. Wird der Taster 4 zum ersten Mal betätigt, so wird zunächst der erste und anschließend der zweite Messwert gemessen. Dieser Fall hat für die Steuereinrichtung 3 keine Bedeutung, weshalb die Messeinrichtung 8 auch kein Signal übermittelt. Wird der Taster 4 zum zweiten Mal betätigt, und damit das Kommando zum Ausschalten der Getränkezubereitungseinrichtung gegeben, dann folgt in der Reihe der Messungen auf den dritten Messwert der zweite Messwert. Im diesem Fall sendet die Messeinrichtung 4 ein Signal zum Abschalten an die Steuereinheit 3, die dann auf die oben beschriebene Weise den zweiten Schaltkontakt 7 öffnet und damit die Getränkezubereitungseinrichtung stromlos schaltet. Zusätzlich kann die Steuereinheit 3 beispielsweise nach einer voreingestellten Zeitspanne die ungenutzte Getränkezubereitungsmaschine stromlos schalten. Dadurch kann der Stromverbrauch eines "Stand-by"-Zustands reduziert werden.

Da es sich bei der vorhergehenden, detailliert beschriebenen Stromschaltungsvorrichtung um ein Ausführungsbeispiel handelt, kann sie in üblicher Weise vom Fachmann in einem weiten Umfang modifiziert werden, ohne den Bereich der Erfindung zu verlassen. Insbesondere kann auch die konkrete Ausgestaltung des mechanischen Tasters in anderer Form als in der hier beschriebenen folgen. Ebenso können die Dioden als Strommodifikatoren in einer anderen Form ausgestaltet werden. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Stromsschaltungsvorrichtung
- 2: Stromkreis
- 3: Steuereinheit
- 4: Taster
- 5: Bedienelement
- 6: erster Schaltkontakt
- 7: zweiter Schaltkontakt
- 8: Messeinrichtung
- 9: Signalverbindung von der Messeinrichtung zur Steuereinheit
- 10: Erste Diode
- 11: Zweite Diode
- 12: Signalverbindung von der Steuereinheit zum zweiten Schaltkontakt
- 13: Funktionseinheit der Getränkezubereitungseinrichtung
- 14: Signalverbindung von der Funktionseinheit zur Steuereinheit
- 15: Wechselstromquelle
- 16: Erfassungsvorrichtung
- 17: Relaisspule
- 18: Relais

## Patentansprüche

1. Stromschaltungsvorrichtung (1) eines Haushaltsgeräts, insbesondere einer Getränkezubereitungseinrichtung,
- mit einem Stromkreis (2) zur Versorgung der Stromschaltungsvorrichtung (1) mit elektrischem Strom,
- mit einer elektrisch betriebenen Steuereinheit (3) im Stromkreis (2), die zur Abgabe von Steuersignalen ausgebildet ist,
- mit einem Taster (4) im Stromkreis (2) der so geschaltet ist, dass er die Steuereinheit (3) mit Strom versorgen kann und der einen ersten Schaltkontakt (6) und ein Bedienelement (5) umfasst,
- mit einem zweiten Schaltkontakt (7) im Stromkreis (2), der so geschaltet ist, dass er die Steuereinheit (3) unabhängig vom Taster (4) mit Strom versorgen kann, der eine Signalverbindung (12) zur Steuereinheit (3) aufweist und der gemäß den Signalen der Steuereinheit (3) öffnet oder schließt, wobei das Bedienelement (5) mit dem ersten Schaltkontakt (6) derart zusammen wirkt, dass der erste Schaltkontakt (6) durch eine Betätigung des Bedienelements (5) schließt und nach einer kurzen definierten Zeitdauer wieder öffnet, wobei im Stromkreis (2) eine Erfassungsvorrichtung (16) angeordnet ist, **dadurch gekennzeichnet, dass** - die Erfassungsvorrichtung (16) eine Messeinrichtung (8) umfasst, die Messwerte aus den anliegenden elektrischen Spannungen ermittelt und Flanken im Verlauf der Messwerte erkennt, die eine Signalverbindung (9) zur Steuereinheit (3) aufweist, und die dazu ausgebildet ist, den jeweiligen Messwerten entsprechend ein Signal an die Steuereinheit (3) abzugeben, und
- die zwei Strommodifikatoren (10, 11) umfasst, die im Stromkreis so angeordnet sind, dass die Messeinrichtung (8) vom ersten Schaltkontakt (6) über den ersten Strommodifikator (10) sowie vom zweiten Schaltkontakt (7) über den zweiten Strommodifikator (11) mit Strom versorgt werden kann, und dass die Steuereinheit (3) vom ersten Schaltkontakt (6) über den ersten und den zweiten Strommodifikator (10, 11) mit Strom versorgt werden kann, und die derart auf den sie durchfließenden elektrischen Strom einwirken, dass je nachdem, ob einer oder beide Schaltkontakte (6, 7) geschlossen sind, jeweils unterschiedliche vordefinierte elektrische Spannungen an der Messeinrichtung (8) anliegen.

2. Stromschaltungsvorrichtung (1) nach Anspruch 1, **dadurch gekennzeichnet, dass** die Steuereinheit (3) sobald sie mit Strom versorgt wird an den zweiten Schaltkontakt (7) ein Steuersignal zum Schließen abgibt.

3. Stromschaltungsvorrichtung (1) nach Anspruch 2, **gekennzeichnet durch** ein Relais (18), das so geschaltet ist, dass die Relaisspule (17) bei geschlossenem zweiten Schaltkontakt (7) mit elektrischem Strom versorgt wird, und dass der zweite Schaltkontakt (7) als Schließkontakt des Relais (18) ausgebildet ist, wobei die Steuereinheit (3) ein elektrisches Betriebsmittel aufweist, um die Stromversorgung der Relaisspule (17) bei Erhalt eines geeigneten Steuersignals zu unterbrechen und damit den zweiten Schaltkontakt (7) zu öffnen.

4. Stromschaltungsvorrichtung nach Anspruch 1 bis 3 mit einer Wechselstromversorgung (15), **dadurch gekennzeichnet, dass** die Strommodifikatoren als Dioden (10, 11) ausgebildet sind, von denen eine Diode (10) die Messeinrichtung (8) mit einer Halbwelle und die andere Diode (11) die Messeinrichtung (8) mit einer entgegengesetzt gerichteten Halbwellen der Netzspannung versorgt.

5. Stromschaltungsvorrichtung (1) nach Anspruch 1 bis 3, **gekennzeichnet dadurch, dass** die Strommodifikatoren als Widerstände ausgebildet sind.

6. Stromschaltungsvorrichtung (1) nach Anspruch 1 bis 5 mit einer Funktionseinheit (13) der Getränkezubereitungseinrichtung zur Durchführung mindestens eines zum Bereiten des Getränks beteiligten Prozesses, **dadurch gekennzeichnet, dass** die Steuereinheit (3) eine Signalverbindung (14) zur Funktionseinheit aufweist und bei Erhalt eines entsprechenden Steuersignals der Funktionseinheit (13) ein Signal an den zweiten Schaltkontakt (7) zum Öffnen abgibt.

## Claims

1. Current circuit apparatus (1) of a household appliance, especially of a beverage preparation device,
- with a circuit (2) for supplying the current circuit apparatus (1) with electrical power,
- with an electrically-driven control unit (3) in the circuit (2), which is embodied to issue control signals,
- with a pushbutton switch (4) in the circuit (2) which is connected so that it can supply the control unit (3) with power and which comprises a first switch contact (6) and an operator control element (5),
- with a second switch contact (7) in the circuit (2), which is connected so that it can supply the control unit (3) with power independently of the pushbutton switch (4), which has a signal connection (12) to the control unit (3) and which opens or closes in accordance with the signals of the control unit (3),
wherein the operator control element (5) interacts with the first switch contact (6) such that the first switch contact (6) closes through an actuation of the operator control element (5) and opens again after a short, defined period of time,
wherein a detection apparatus (16) is disposed in the circuit (2),
**characterised in that** the detection apparatus (16) includes a measuring device (8) which determines measured values from the available electrical voltages and detects flanks in the curve of the measured values, which has a signal connection (9) to the control unit (3) and which is embodied to output the respective measured values to the control unit (3) according to a signal, and
- which has two current modifiers (10, 11) which are disposed in the circuit so that the measuring device (8) can be supplied with power by the first switch contact (6) via the first current modifier (10) and by the second switch contact (7) via the second current modifier (11), and that the control unit (3) can be supplied with power by the first switch contact (6) via the first and the second current modifier (10, 11), which act on the current flowing through them such that, depending on whether one or both switch contacts (6, 7) are closed, different predefined electrical voltages are applied to the measuring device (8) in each case.

2. Current circuit apparatus (1) according to claim 1, **characterised in that**, as soon as the control unit (3) is supplied with power, it issues a control signal to the second switch contact (7) to close.

3. Current circuit apparatus (1) according to claim 2, **characterised by** a relay (18), which is connected so that the relay coil (17) will be supplied with electrical power when the second switch contact (7) is closed, and that the second switch contact (7) is embodied as a make contact of the relay (18), wherein the control unit (3) has an electrical operating means in order to interrupt the power supply of the relay coil (17) on receipt of a suitable control signal and thus to open the second switch contact (7).

4. Current circuit apparatus (1) according to claim 1 to 3 with an AC power supply (15), **characterised in that** the current modifiers are embodied as diodes (10, 11), of which one diode (10) supplies the measuring device (8) with a half wave and the other diode (11) supplies the measuring device (8) with an opposing half wave of the mains voltage.

5. Current circuit apparatus (1) according to claim 1 to 3, **characterised in that** the current modifiers are embodied as resistors.

6. Current circuit apparatus (1) according to claim 1 to 5 with a function unit (13) of the beverage preparation device for carrying out at least one process involved in preparation of the beverage, **characterised in that** the control unit (3) has a signal connection (14) to the function unit and, on receipt of a corresponding control signal of the function unit (13), issues a signal to the second switch contact (7) to open.

## Revendications

1. Dispositif à circuit d'alimentation (1) d'un appareil ménager, notamment d'un dispositif de préparation de boisson,
- comprenant un circuit (2) pour l'alimentation en courant électrique du dispositif à circuit d'alimentation (1),
- comprenant une unité de commande (3) alimentée électriquement dans le circuit (2), qui est conçue pour émettre des signaux de commande,
- comprenant un bouton-poussoir (4) dans le circuit (2), qui est monté de manière à pouvoir alimenter en courant l'unité de commande (3) et qui comprend un premier contact de commutation (6) et un élément de commande (5),
- comprenant un second contact de commutation (7) dans le circuit (2), qui est monté de manière à pouvoir alimenter en courant l'unité de commande (3) indépendamment du bouton-poussoir (4), qui dispose d'une liaison de signalisation (12) avec l'unité de commande (3) et qui s'ouvre ou se ferme conformément aux signaux de l'unité de commande (3),
l'élément de commande (5) coopérant avec le premier contact de commutation (6) de telle sorte que le premier contact de commutation (6) se ferme par actionnement de l'élément de commande (5) et s'ouvre à nouveau après un court laps de temps défini, un dispositif de détection (16) étant disposé dans le circuit (2),
**caractérisé en ce que** le dispositif de détection (16) comprend un dispositif de mesure (8) qui détermine des valeurs mesurées à partir des tensions électriques appliquées et détecte des flancs dans le tracé des valeurs mesurées, qui dispose d'une liaison de signalisation (9) avec l'unité de commande (3) et qui est conçu pour envoyer un signal à l'unité de commande (3) en fonction des valeurs mesurées respectives, et
- qui comprend deux modificateurs de courant (10, 11) qui sont disposés dans le circuit de manière à ce que le dispositif de mesure (8) puisse être alimenté en courant par le premier contact de commutation (6) par l'intermédiaire du premier modificateur de courant (10) et par le second contact de commutation (7) par l'intermédiaire du second modificateur de courant (11), et à ce que l'unité de commande (3) puisse être alimentée en courant par le premier contact de commutation (6) par l'intermédiaire du premier et du second modificateur de courant (10, 11), et qui agissent sur le courant électrique les traversant de telle sorte que, selon qu'un contact de commutation est fermé ou que les deux contacts de commutation (6, 7) sont fermés, des tensions électriques prédéfinies à chaque fois différentes sont appliquées au dispositif de mesure (8).

2. Dispositif à circuit d'alimentation (1) selon la revendication 1, **caractérisé en ce que** l'unité de commande (3) envoie au second contact de commutation (7) un signal de commande pour sa fermeture dès qu'elle est alimentée en courant.

3. Dispositif à circuit d'alimentation (1) selon la revendication 2, **caractérisé par** un relais (18) qui est branché de manière à ce que la bobine de relais (17) soit alimentée en courant électrique lorsque le second contact de commutation (7) est fermé, et à ce que le second contact de commutation (7) soit conçu en tant que contact de fermeture du relais (18), l'unité de commande (3) comportant un matériel électrique pour interrompre l'alimentation en courant de la bobine de relais (17) à la réception d'un signal de commande approprié et, ainsi, ouvrir le second contact de commutation (7).

4. Dispositif à circuit d'alimentation selon les revendications 1 à 3, comprenant une alimentation en courant alternatif (15), **caractérisé en ce que** les modificateurs de courant sont conçus en tant que diodes (10, 11), une diode (10) alimentant le dispositif de mesure (8) avec une demi-onde de la tension de réseau et l'autre diode (11) alimentant le dispositif de mesure (8) avec une demi-onde en sens inverse de cette tension.

5. Dispositif à circuit d'alimentation (1) selon les revendications 1 à 3, **caractérisé en ce que** les modificateurs de courant sont conçus en tant que résistances.

6. Dispositif à circuit d'alimentation (1) selon les revendications 1 à 5, comprenant une unité fonctionnelle (13) du dispositif de préparation de boisson pour exécuter au moins un processus intervenant dans la préparation de la boisson, **caractérisé en ce que** l'unité de commande (3) dispose d'une liaison de signalisation (14) avec l'unité fonctionnelle et envoie un signal au second contact de commutation (7) pour son ouverture à réception d'un signal de commande correspondant de l'unité fonctionnelle (13).
